(19) Europäisches Patentamt

European Patent Office

Office européen des brevets

(11) Veröffentlichungsnummer: **0 318 965 B1**

(12) **EUROPÄISCHE PATENTSCHRIFT**

(45) Veröffentlichungstag der Patentschrift: **15.02.95**

(21) Anmeldenummer: **88119993.9**

(22) Anmeldetag: **30.11.88**

(51) Int. Cl.⁶: **B23Q 7/14**, B23Q 7/00, B23Q 7/03

(54) **Flexible Fertigungsanlage.**

(30) Priorität: **30.11.87 DE 3740597**

(43) Veröffentlichungstag der Anmeldung:
**07.06.89 Patentblatt 89/23**

(45) Bekanntmachung des Hinweises auf die
Patenterteilung:
**15.02.95 Patentblatt 95/07**

(84) Benannte Vertragsstaaten:
**DE ES FR GB IT**

(56) Entgegenhaltungen:
**US-A- 2 895 354**
**US-A- 3 029 710**
**US-A- 3 473 643**
**US-A- 4 230 003**
**US-A- 4 306 646**

**SOVIET INVENTIONS ILLUSTRATED, Woche 8424, Sektion P, Klasse P, Seite 56, Nr.84-150211, Derwent Publications Ltd, London, GB; & SU-A-1 042 959 (GALOCHKIN) 23-09-1983**

**SOVIET INVENTIONS ILLUSTRATED, Woche D23, Sektion T, 15. Juli 1981, Klasse T, Seite 6, Nr. 81, Derwent Publications Ltd, London,**

**GB; & SU-A-764 940 (KOLOZENKOIP) 28-09-1980**

**PATENT ABSTRACTS OF JAPAN, Band 9, Nr. 51 (M-361)[1774], 6. März 1985;& JP-A-59 187 436 (MAZDA) 24-10-1984**

**PATENT ABSTRACTS OF JAPAN, Band 11, Nr. 266 (M-620)[2713], 28. August 1987;& JP-A-62 068 258 (MAZDA MOTOR) 28-03-1987**

(73) Patentinhaber: **Maschinenbau Grieshaber GmbH & Co.**
**Hauptstrasse 1**
**D-77709 Wolfach (DE)**

(72) Erfinder: **Weber, Wilfried, Dipl.-Ing.**
**Buchenstrasse 44**
**D-7406 Mössingen (DE)**

(74) Vertreter: **Dreiss, Hosenthien, Fuhlendorf & Partner**
**Gerokstrasse 6**
**D-70188 Stuttgart (DE)**

**Beschreibung**

Die vorliegende Erfindung bezieht sich auf eine flexible Fertigungsanlage, bestehend aus einer beliebigen Anzahl hintereinander angeordneter Bearbeitungsstationen durch die quer zu den Bearbeitungsstationen eine Transportbahn zum Zu- und Abführen der zu bearbeitenden Werkstücke verläuft, wobei die Transportbahn eine endlose Fördereinrichtung mit gruppenweise angeordneten Werkstückträgern ist, die eine Anzahl von Werkstückaufnehmern aufweisen, wobei die Anzahl der Werkstückträger je Gruppe um eins größer ist als die Anzahl der Bearbeitungsstationen und wobei die Fördereinrichtung die Werkstücke am Anfang der Fertigungsanlage von einem Einlaufmagazin übernimmt und am Ende der Anlage die bearbeiteten Werkstücke einem Auslaufmagazin übergibt.

Die Werkstücke können beispielsweise Nocken- oder Kurbelwellen sein. Derartige Wellen weisen im axialen Abstand zueinander rotationssymmetrische Oberflächen auf, welche Lager darstellen. In diesen Lagerstellen wird entweder die Welle selbst gelagert oder es greifen um diese Lager andere Teile einer Maschine, beispielsweise Pleuel von Kolben einer Brennkraftmaschine oder Pumpe oder eines Verdichters.

Es ist bekannt, diese rotationssymmetrischen Flächen einer abtragenden Oberflächenbehandlung durch Schleifen oder Superfinishen zu unterziehen, um die Rundheit und Oberflächengüte zu verbessern. Ein Superfinishstein wird auf die zu bearbeitende Stelle aufgesetzt und paßt sich der Krümmung der Werkstücksstelle an. Er führt eine Schwingbewegung in axialer Richtung durch. Das Werkstück rotiert. Es ist aber auch bekannt, anstelle eines steinförmigen Werkzeuges oder zusätzlich zu einem profilierten Stein ein Schleifband zu verwenden (US-PS 19 08 048), wodurch eine läppende Bearbeitung ermöglicht wird. Andere Schleifverfahren sind ebenfalls anwendbar.

Es ist ferner bekannt für wellenförmige Werkstücke, die Bearbeitung aller axial nebeneinanderliegenden Lagerstellen gleichzeitig vorzunehmen, auch beispielsweise bei der Bearbeitung von Kurbelwellenzapfen, deren kreissymmetrische Oberflächen um den Kurbelradius aus der Achse der Welle herausbewegt werden. Dann ist es erforderlich, Einrichtungen verfügbar zu machen, die dieser Auslenkung folgen (US-PS 2 270 522 oder US-PS 1 993 543).

Die gleichzeitige Bearbeitung aller Lagerstellen einer Welle genügt aber nicht den durch die fortschreitende Automatisierung gestiegenen Anforderungen bei der schnellen Bereitstellung solcher fertig und mit höchstem Qualitätsgrad bearbeiteten Wellen als Einzelteile in einem Herstellprozeß für Arbeits- oder Kraftmaschinen. Vielmehr erfordern vollständig oder nahezu vollständig automatisierte Verfahren die taktmäßige Verarbeitung und Bereitstellung von gleichartigen Werkstücken, wie etwa Nockenwellen oder Kurbelwellen. Dennoch soll eine automatische Bearbeitungsmaschine durch einfaches Umrüsten auf die Bearbeitung von Nocken- und Kurbelwellen problemlos umstellbar sein.

Bei jeder Art von zu bearbeitenden Wellen soll aber auch ein Mischbetrieb möglich sein. Es sollen ohne großen Umrüstaufwand beliebig lange und beliebig gestaltete Nockenwellen, d.h. mit unterschiedlichen Abständen zwischen den Nocken und dem Anfang und Ende der Nockenwelle sowie zwischen den Nocken befindlichen Lagerflächen so fertig bearbeitet werden, daß Wellen mit völlig unbearbeiteten Lagerstellen eingelegt und hinter der Maschine nach einer automatischen Bearbeitung einbaufertig entnommen werden können. Das Einlegen und Entnehmen soll ebenfalls automatisch möglich sein. Hierfür müssen die Einlege- und Entnahmestationen eingerichtet sein. Diese Forderung gilt für Nockenwellen ebenso wie für Kurbelwellen oder allgemein für die zu bearbeitenden Werkstücke. Bei Wellen beispielsweise müssen unterschiedliche Arten von Lagerstellen bearbeitet werden können. Zumindest eine Lagerstelle einer beliebigen Art von Wellen weist zum Beispiel zu bearbeitende radiale Flächen auf, um axiale Kräfte aufzunehmen oder um ein axiales Spiel zu vermeiden. Diese radialen Flächen müssen ebenso bearbeitet werden wie ringförmige ballige Oberflächen von teilweise erheblicher, auf alle Fälle aber unterschiedlicher axialer Erstreckung. Randzonen sind ebenfalls zu bearbeiten, auch wenn diese Randzonen Krümmungsradien aufweisen.

Mit der SU-A 1,042,959 ist eine flexible Fertigungsanlage der eingangs genannten Art bekannt geworden, die zwei hintereinander angeordnete Gruppen von Bearbeitungsstationen aufweist, wobei in jeder Gruppe die Werkstücke von einer Bearbeitungsstation bearbeitet werden. Hierfür werden die Werkstücke nacheinander von einem Transportband angehoben und bearbeitet, in der Bearbeitungsstation parallel zum Transportband verschoben und wieder auf das Transportband abgesetzt. Als nachteilig hat sich herausgestellt, daß für die axiale Verschiebung eine zusätzliche Verschiebeeinrichtung in jeder Bearbeitungsstation erforderlich ist. Außerdem wird als nachteilig angesehen, daß die zu bearbeitenden Werkstücke alle gleichzeitig in die hierfür vorgesehenen Bearbeitungsstationen angehoben werden. Um dies zu ermöglichen ist der Abstand der Werkstückträger einer Gruppe auf die Förderkette kleiner als der Abstand der Gruppen mit gleichen Bearbeitungsstationen. Die Flexibilität der Anlage wird nur dadurch erreicht, daß gleiche Bearbeitungsstationen zu Gruppen zusammengefaßt werden.

Ausgehend von der SU-A 1,042,959 schlägt die Erfindung eine Fertigungsanlage vor, bei der der Abstand einer Gruppe von Werkstückträgern auf der Fördereinrichtung zur nächsten Gruppe größer ist als der Abstand der Stationen.

Hierbei sind die Stationen hintereinander selbst parallel zu den Teilen ausgerichtet. Verbunden sind die Stationen durch eine quer zu den Stationen und den Teilen verlaufende Transportbahn, deren Einzelheiten nachstehend noch näher erläutert werden. Die hintereinander angeordneten Stationen übergreifen die sie verbindende Transportbahn und sind untereinander im Prinzip gleich ausgebildet.

Sie weisen nämlich grundsätzlich eine beliebige Vielzahl von Einzelbearbeitungseinrichtungen auf, welche selbst alle auswechselbar sind, um ein flexibles System zu ermöglichen.

Die Bearbeitung der Werkstücke kann durch die Mehrzahl der längs des Endlosförderers aufgebauten Stationen entweder mehrstufig in der Weise erfolgen, daß auf einer folgenden Station eine Nachbearbeitung derselben Oberfläche stattfindet oder einzelne zu dicht beieinanderliegende Bearbeitungsflächen, die wegen ihrer geometrischen Nähe nicht in einer Station bearbeitet werden können, lassen sich in aufeinanderfolgenden Stationen nacheinander bearbeiten, oder es können einzelne Stationen für Sonderbearbeitungen ausgelegt sein.

Eine Sonderbearbeitung kann beispielsweise darin bestehen, daß in dieser Station das Werkstück nicht nur in eine rotierende Bewegung, sondern überlagernd in eine axiale hin- und hergehende Bewegung versetzt wird. Dadurch läßt sich vorteilhafterweise ein diagonal verlaufender Schliff auf einer rotationssymmetrischen Lagerfläche eines wellenförmigen Werkstückes aufbringen.

Die Werkstücksrotationsrichtung läßt sich ferner auch umkehren. Der genaue Aufbau der einzelnen Bearbeitungsstationen ist in der EP-A 0 318 966 näher beschrieben.

Als Fördersysteme für die zu bearbeitenden Werkstücke können verschiedene endlose Förderer verwendet werden, wie z.B. Kettenförderer, und Bandförderer. Der Fördermechanismus soll anhand eines endlosen Kettenförderers im folgenden näher beschrieben werden. Der Kettenförderer besteht aus zwei endlosen Förderketten, welche in vorgegebenen Längsabständen paarweise, d.h. zueinander von Kette zu Kette ausgerichtete Werkstückaufnehmer tragen, welche eine sich nach oben öffnende Kehle darstellen, damit Werkstückwellen beliebigen Durchmessers darin aufgenommen werden können. Die beiden endlosen Ketten werden gemeinsam angetrieben und sind in ihrem axialen Abstand so voneinander einstellbar, daß sie einerseits beliebig lange Werkstücke aufnehmen können und andererseits der Abstand der beiden Ketten zu ihrer gedachten Längsmittelachse stets gleichbleibt. Mit anderen Worten: Die Lage des aus zwei Ketten bestehenden Endlosförderers bleibt konstant in Bezug auf die Mittelachse der Bearbeitungsstationen, die mit dem Endlosförderer verbunden sind.

Das erleichtert die Ausrichtung der Bearbeitungseinrichtungen zu den herangeführten wellenförmigen Werkstücken.

Am Anfang der Maschine, ist eine Werkstückaufnahmestation vorgesehen. In dieser Aufnahmestation werden die ankommenden unbearbeiteten Werkstücke, hier beispielsweise Nocken- oder Kurbelwellen, auf seitlich außerhalb und oberhalb des Endlosförderers paarweise angeordneten prismatischen Ablagekehlen, die denen auf den Ketten ähnlich sind, abgelegt. Diese offenen Prismen sind in beliebiger Anzahl, beispielsweise 5 bis 7 auf jeder Seite zu Blöcken zusammengefaßt. Der Abstand dieser Blöcke dicht außerhalb der Ketten ist mit dem Abstand der Ketten parallel zu den wellenförmigen Werkstücken verstellbar. Normalerweise befinden sich die offenen Prismen oberhalb der ähnlich gestalteten Prismen auf den Förderketten, so daß unter den hierauf abgelegten Werkstücken die Förderketten mit den auf den Förderketten aufsitzenden offen prismatischen Auflagern frei hindurchgleiten können. Zur Übergabe von Werkstücken von den Blöcken auf den Förderer sind die in den Blöcken befindlichen prismatischen Stücke jedoch absenkbar.

Durch diese Absenkbewegung werden die Werkstücke von den Blöcken auf den Endlosförderer übernommen. In der Achse der oberen Positionen der prismatischen Stücke der Blöcke befinden sich Lichtschranken, mit deren Hilfe festgestellt werden kann, ob ein Werkstück aufliegt oder nicht. Sind alle prismatischen Aufnehmer der Blöcke belegt, übernimmt der Förderer das maschineninnere Werkstück und transportiert es zur ersten Bearbeitungsstation. Dort wird es von einem Paar prismatischer oben offener Blöcke so übernommen, daß es an einem Ende von einem Spannkopf und am anderen Ende von einer Drehspitze axial erfaßt wird. Dann erfolgt die Bearbeitung in der ersten Station und wiederum eine Ablage auf ortsfeste, jedoch in ihrer Breite verstellbare und absenkbare oben offene prismatische Blöcke, von denen wiederum eine Übernahme auf den Förderer möglich ist.

Der Förderer transportiert auf diese Weise jedes Werkstück zu einer nachfolgenden Bearbeitungsstation bzw. zu einer später folgenden Station, wenn zwei aufeinanderfolgende Stationen für dieselbe Bearbeitung jedoch an anderer Stelle desselben Werkstückes ausgelegt sind. Hinter der letzten Bearbeitungsstation befindet sich eine Entnahmestation, die im wesentlichen so ausgestaltet ist wie die Aufnahmestation.

Der Abstand der Bearbeitungsstationen untereinander und die Transportgeschwindigkeit sollte so gewählt werden, daß die Transportzeit zwischen zwei aufeinanderfolgenden Stationen etwa der Bearbeitungszeit in den Stationen entspricht.

Im folgenden wird die Erfindung anhand eines schematisch zeichnerisch dargestellten Ausführungsbeispiels beschrieben.

Es zeigen:

Fig.1       eine Seitenansicht der wesentlichen Teile der flexiblen Fertigungsanlage;

Fig.2       eine schematische Darstellung von verschiedenen Positionen des Förderers;

Fig.3       eine schematische perspektivische Gesamtansicht der wesentlichen Teile der Anlage.

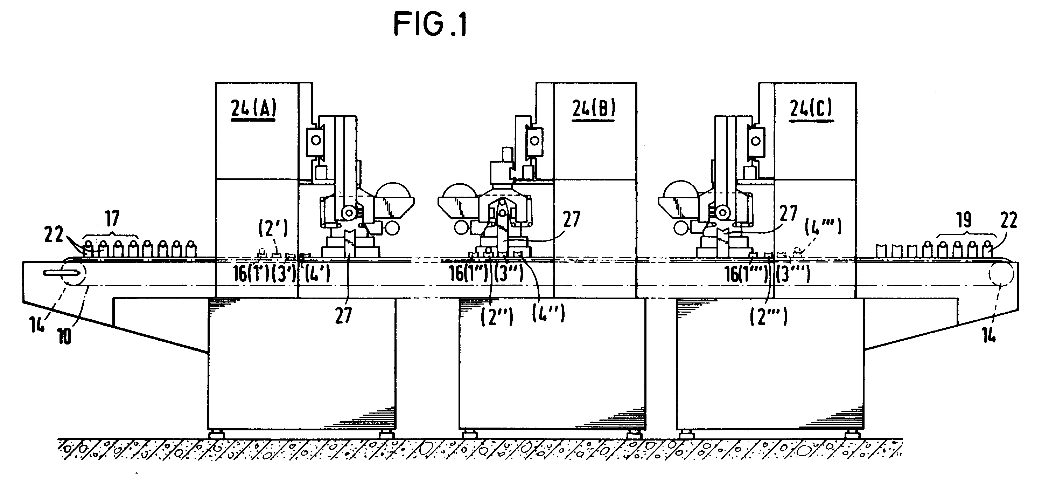

Fig. 1 zeigt eine teilweise schematisierte Seitenansicht einer flexiblen Fertigungsanlage. Die Anlage besteht aus einem Förderer, hier einem endlosen Kettenförderer, der aus zwei gleichen Einzelketten 10 gebildet wird. Diese Ketten 10 werden über eine gemeinsame Welle 12 angetrieben. Auf dieser Welle sind axial verschiebbar zwei Führungsräder 14 angeordnet, so daß eine Verstellbarkeit des gegenseitigen Kettenabstands gegenüber einer eingehaltenen Mittelachse gegeben ist und so unterschiedlich breite zu bearbeitende Werkstücke 18 (hier Kurbelwellen) transportiert werden können. An den Ketten 10 sind oben offene prismatische Werkstückträger 16 angebracht, welche die zu bearbeitenden Werkstücke 18 für einen Weitertransport aufnehmen. Die Werkstückträger 16 sind sich auf beiden Ketten 10 gegenüberliegend paarweise angeordnet, wobei die Anzahl der Werkstückträger 16 je Paar um eins größer ist als die Anzahl von Bearbeitungsstationen 24 einer Maschine.

Im vorliegenden Beispiel verbindet der Kettenförderer 10 drei aufeinanderfolgende Bearbeitungsstationen 24(A), 24(B), 24(C). Die Werkstücke, hier Kurbelwellen 18, werden in einem Einlaufmagazin 17 maschinell auf Werkstückaufnehmer 22 eines ebenfalls in der Breite entsprechend des eingezeichneten Doppelpfeiles 20a verstellbaren Lifts 20 gesetzt. In seiner oberen Stellung ragen dessen Werkstückaufnehmer 22 über die Werkstückträger 16 des Kettenförderers hinaus. Durch eine Auf- oder Abbewegung des Liftes 20 in Richtung des eingezeichneten Pfeiles 21a können die Werkstücke 18 vom Aufnehmer 22 auf den Förderer 10 übernommen werden. Durch Absenken des Lifts 20 wird das jeweils maschineninnerste Werkstück 18 vom Lift 20 auf den Kettenförderer 10 gegeben.

Die Werkstücke 18 werden in solchen Abständen auf den Förderer 10 aufgesetzt, daß Transport und Bearbeitung von aufeinanderfolgenden Werkstücken 18 zugleich erfolgt und somit keine Zeit für den Transport verlorengeht.

Über den Kettenförderer 10 werden die Werkstücke 18 zu ihren einzelnen Bearbeitungsstationen 24(A), 24(B), 24(C) befördert. Zur Bearbeitung und evtl. Zwischenlagerung in diesen Arbeitsstationen 24 werden die Werkstücke 18 mit einem Einzellift 25, 27 wieder vom Kettenförderer 10 abgehoben. Das Werkstück 18 wird in die Ebene eines Reitstocks 26 gehoben und von diesem und einer axial verschiebbaren Spannspindel 36 erfaßt. Die Spannspindel 36 ist mit einem Antrieb verbunden, um das Werkstück 18 um seine Achse in Drehung zu versetzen. Werkstücke wie Kurbelwellen oder Nockenwellen weisen mehrere Lager auf, die von mehreren parallelen Schleifwerkzeugen gleichzeitig bearbeitet werden. Um verschiedene Kurbelwellen oder Nockenwellen bearbeiten zu können, sind die einzelnen Schleifwerkzeuge frei zueinander positionierbar.

Die Werkzeugträger 28 können in Form von auswechselbaren Kassetten Schleifwerkzeuge verschiedener Art aufnehmen, wie z.B. Steinhalter oder Schleifvorrichtungen mit von Anpreßschuhen an die Welle gepreßtem Schleifband. Auch ein Drehen der Schleifvorrichtung um 90° zur Feinbearbeitung von senkrechten Flächen ist möglich. Der genauere Aufbau der Bearbeitungsstationen ist in der EP-A 0 318 966 beschrieben.

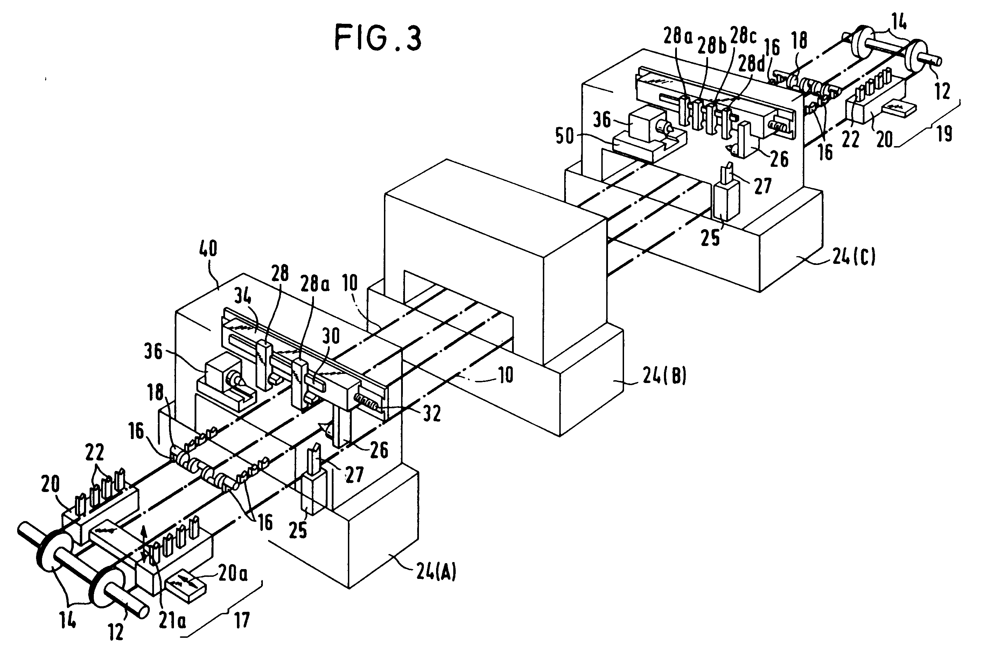

In die in Fig. 3 beispielhaft dargestellt dritte Bearbeitungsstation 24(C) sind vier Werkzeugträger 28a-d eingezeichnet. In dieser Station 24(C) kann zusätzlich zur Drehbewegung über die Spannspindel 36 eine axiale hin- und hergehende Bewegung des Werkstücks 18 stattfinden. Hierfür ist die Spannspindel 36 in ihrem Schlitten 50 beweglich und der Reitstock 26 erhält ebenfalls gegen die Wirkung einer Feder in derselben axialen Richtung eine Bewegungsfreiheit. Auf diese Weise läßt sich in den Lagerflächen ein Kreuzschliff diagonal aufbringen.

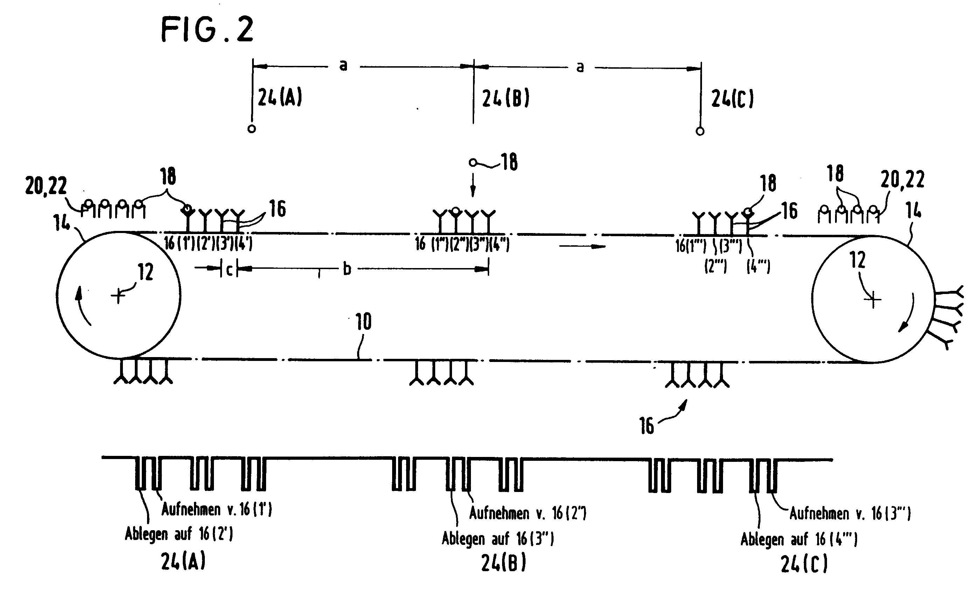

In Fig. 2 ist schematisch der Gang von Werkstücken 18 durch die Stationen 24(A), 24(B) und 24(C) dargestellt, welche einen Abstand von a = 2000 mm aufweisen. Der Abstand der Werkstückträgergruppe 16' zur Werkstückträgergruppe 16'' beträgt beispielhaft b = 2300 mm.

Die Anzahl der Einzelwerkstückträger 16(1), 16(2), 16(3) und 16(4) ist erfindungsgemäß um eins größer als die Zahl der Bearbeitungsstationen 24, also im vorliegenden Beispiel = vier. Der Abstand der einzelnen Werkstückträger 16(1), 16(2), 16(3) und 16(4) beträgt in diesem Beispiel c = 80 mm.

Der Weg der Kette 10 von einem Stop zum nächsten Stop verläuft folgendermaßen, wobei stets während eines Stops in jeder Station 24 ein Werkstückwechsel stattfindet:

4

Jedes Werkstück durchläuft zwischen und unter den Stationen 24(A) bis 24(C) folgende Wege:

```
 1. Weg (c)              80 mm  ⎫
                                ⎪
 2. Weg (b-a)           300 mm  ⎪
                                ⎪
 3. Weg (c)              80 mm  ⎬  im Bereich der Station 24(A)
                                ⎪
 4. Weg (b-a)           300 mm  ⎪
                                ⎪
 5. Weg (c)              80 mm  ⎭

 6. Weg (b-3c-2b+2a)   1460 mm     von 24(A) zu 24(B)

 7. Weg (c)              80 mm  ⎫
                                ⎪
 8. Weg (b-a)           300 mm  ⎪
                                ⎪
 9. Weg (c)              80 mm  ⎬  im Bereich der Station 24(B)
                                ⎪
10.Weg (b-a)            300 mm  ⎪
                                ⎪
11.Weg (c)              80 mm  ⎭

12.Weg (b-3c-2b+2a)   1460 mm     von 24(B) zu 24(C)

usw.
```

Das Werkstück 18 wird also in der ersten Bearbeitungsstation 24(A) von Werkstückträger 16(1') aufgenommen und auf den Werkstückträger 16(2') der nächsten Werkstückaufnehmergruppe abgesetzt. In der Bearbeitungsstation 24(B) wird das Werkstück 18 vom Werkstückträger 16(2'') auf den Werkstückträger 16(3'') umgesetzt. Schließlich wird in der Bearbeitungsstation 24(C) das Werkstück 18 vom Werkstückträger 16 (3''') auf den Werkstückträger 16(4''') umgesetzt, von dem es am Ende der Fertigungsstraße abgenommen wird.

Der Vorteil ist, daß die Werkstücklifte 25, 27 in ihren Positionen zu den dazugehörigen Bearbeitungsstationen 24 unverändert bleiben. Eventuelle Längenänderungen der Kette 10 durch Recken im Betrieb bleiben ohne schädlichen Einfluß auf die Genauigkeit der Arbeitsweise der Maschine.

Durch die prismatische, oben offene Form der Werkstückträger 16 bzw. der Werkstückaufnehmer 18 wird jedes Spiel ausgeglichen, da die Kettenreckung unter dem Öffnungsmaß der oben offenen Prismen bleiben wird. Dieses Maß ist wiederum so gewählt, daß jeder vorkommende Durchmesser von Werkstückwellen überdeckt bleibt.

**Patentansprüche**

1. Flexible Fertigungsanlage, bestehend aus einer beliebigen Anzahl (n) hintereinander angeordneter Bearbeitungsstationen (24A, 24B, 24C ...) durch die quer zu den Bearbeitungsstationen eine Transportbahn zum Zu- und Abführen der zu bearbeitenden Werkstücke (18) verläuft, wobei die Transportbahn eine endlose Fördereinrichtung mit gruppenweise angeordneten Werkstückträgern (16) ist, die eine Anzahl von Werkstückaufnehmern (22) aufweisen, wobei die Anzahl der Werkstückträger (16) je Gruppe um eins größer ist als die Anzahl (n) der Bearbeitungsstationen (24A, 24B, 24C ...) und wobei die Fördereinrichtung die Werkstücke am Anfang der Fertigungsanlage von einem Einlaufmagazin (17) übernimmt und am Ende der Anlage die bearbeiteten Werkstücke einem Auslaufmagazin (19) übergibt, **dadurch gekennzeichnet,** daß der Abstand (b) einer Gruppe von Werkstückträgern (16) auf der Fördereinrichtung zur nächsten Gruppe größer ist als der Abstand (a) der Stationen (24).

**2.** Flexible Fertigungsanlage nach Anspruch 1, **dadurch gekennzeichnet,** daß die endlose Fördereinrichtung aus einem Kettenförderer (10) oder Bandförderer besteht.

**3.** Flexible Fertigungsanlage nach Anspruch 2, **dadurch gekennzeichnet**, daß der endlose Kettenförderer (10) aus zwei über eine gemeinsame Welle (12) angetriebenen Ketten besteht, welche in Bezug auf eine verbleibende Mittelachse seitlich verstellbar sind.

**4.** Flexible Fertigungsanlage nach Anspruch 3, **dadurch gekennzeichnet,** daß jede Kette (10) paarweise zueinander ausgerichtete Werkstückträger (16) aufweist, deren Anzahl der Paare um eins größer ist als die Anzahl der Stationen (24).

**5.** Flexible Fertigungsanlage nach Anspruch 3 oder 4**, dadurch gekennzeichnet,** daß zusammen mit den Ketten (10) quer zum Endlosförderer seitlich außen unmittelbar zu diesen in der Anlage benachbarte Mehrfachlifte (20) und Einzellifte (25) mit oben prismatisch offenen Werkstückaufnehmern (22, 27) seitlich verstellbar sind, die eine Werkstückaufgabestation (17, 20, 22) am Anfang des Endlosförderers, in jeder Station (24) eine Übergabestation (25, 27) und am Ende des Endlosförderers (10) eine Werkstückabgabestation (17, 20, 22) bieten, wobei alle Werkstückaufnehmer bei stillgesetzter Bewegung der Ketten (10) durch Absenken der Werkstücke (18) übernehmen oder abgeben.

**6.** Flexible Fertigungsanlage nach einem der Ansprüche 3 bis 5, **dadurch gekennzeichnet,** daß in der Achse eines paarweise angeordneten Werkstückaufnehmers (22) eine Lichtschranke zum Feststellen der Belegung dieses Werkstückaufnehmerpaares (22) angeordnet ist.

**Claims**

**1.** Flexible manufacturing device comprising a random number (n) of processing stations, one station beeing arranged behind another station (24A, 24B, 24C), transport means passing through said processing stations for transporting working parts (18) to and from said working stations wherein these transport means are endless conveyor means provided with working part holders (16) arranged in groups, and comprising a number of working part receptors (22), wherein the number of the working part holders (16) of each group equals the number (n) of the working stations (24A, 24B, 24C) plus one, said conveying means receiving working parts at the beginning of said manufacturing device from a lead-in-magazine (17), and transferring the processed working parts to one lead-out-magazine (19) **characterized in that** the distance (b) between one group of working part holders (16) on the conveying means and another group is bigger than the distance (a) between two stations (24).

**2.** Flexible manufacturing device according to claim 1 characterized in that the endless conveying means are either chain conveyor means (10) or belt conveyor means.

**3.** Flexible manufacturing device according to claim 2 characterized in that the endless chain conveyor means (10) comprises two chains driven by a common shaft (12), wherein these chains can be laterally adjusted to a remaining central axis.

**4.** Flexible manufacturing device according to claim 3 characterized in that the working part holders (16) on each of said chains (10) are arranged facing each other in pairs with the number of pairs being one higher than the number of stations (24).

**5.** Flexible manufacturing device according to claim 3 or 4, characterized in that multiple lifts (20) and single lifts (25) positioned exteriorly relative to the chains (10) with working part receptors (22, 27), being prismatically open at their tops are laterally adjustable together with said chains, providing a working part receiving station (17, 20, 22) at the beginning of said endless conveying means, a working part transferring station (17, 20, 22), in each station (24) and a working part discharging station (17, 20, 22), at the end of said endless conveying means (10), wherein all of working part receptors, when lowered, either receive or discharge working parts (18) as the movement of said chain (10) stops.

**6.** Flexible manufacturing device according to one of claims 3 to 5 characterized in that a photo cell is provided on the axis of working part receptors (22) arranged by pairs to determine check whether said pair of working part receptors (22) is engaged.

**Revendications**

1. Installation de fabrication flexible, composée d'un nombre quelconque (n) de stations de travail (24A, 24B, 24C,...) rangées les unes dernières les autres, à travers lesquelles, et perpendiculairement aux stations de travail se situe une voie de transport pour amener et enlever les pieces (18) à usiner, où cette voie de transport est un convoyeur sans fin avec des porte-pièces (16) disposés en groupes, qui comprennent un nombre donné de réceptacles (22) pour pièces, et où le nombre de porte-pièces (16) par groupe est égal au nombre (n) de stations de travail (24A, 24B, 24C,...) plus un, et où le convoyeur prend les pièces au début de l'installation de fabrication dans un magasin d'introduction (17), et les dêpose en fin d'installation dans un magasin de sortie (19), **caractérisée en ce** que la distance (b) entre un groupe de porte-pièces (16) sur le convoyeur et le groupe suivant est plus grande que la distance (a) entre les stations (24).

2. Installation de fabrication flexible selon la revendication 1, caratérisée en ce que le convoyeur sans fin est un convoyeur à chaines (10) ou un convoyeur à bandes.

3. Installation de fabrication flexible selon la revendication 2, caractérisée en ce que le convoyeur sans fin à chaines (10) est constitué de deux chaines entrainées par un même arbre (12), qui sont déplaçables en largeur, par rapport à un axe central restant fixe.

4. Installation de fabrication flexible selon la revendication 3, caractérisée en ce que chaque chaine (10) comporte des porte-pièces (16), orientés l'un vers l'autre par paires avec un nombre de paires égal au nombre de stations (24) plus un.

5. Installation de fabrication flexible selon les revendications 3 ou 4, caractérisée en ce que des ascenseurs multiples (20) et des ascenseurs simples (25), voisinant les chaines directement sur le côté extérieur, avec en haut des réceptacles de pièces (22, 27) prismatiques ouverts, sont déplaçables perpendiculairement au convoyeur sans fin, d'un seul ensemble avec les chaines (10), et en ce qu'ils offrent une station de chargement de pièces (17, 20, 22) au début du convoyeur sans fin, une station de transfert (25, 27) dans chaque station (24), et une station de déchargement (17, 20, 22) à la fin du convoyeur sans fin (10), de telle sorte que tous les réceptacles de pièces en cas d'arrêt de mouvement des chaines (10), chargent ou déchargent par abaissement des pièces (18).

6. Installation de fabrication flexible selon un des renvendications 3 à 5, caractérisée en ce qu'une cellule photoélectrique est positionnée sur l'axe de deux réceptacles de pièces (22) apairés pour vérifier le chargement de cette paire de réceptacles (22) pour pièces.

FIG.1

FIG.2

EP 0 318 965 B1

# FIG.3